# EUROPEAN PATENT APPLICATION

(11) **EP 1 990 440 A1**
(43) Date of publication of application: **12.11.2008**
(21) Application number: 08251416.7
(22) Date of filing: 11.04.2008
(51) Int. Cl.: C23C 4/08, C23C 28/00, C23C 30/00, F01D 5/28, F01D 25/00

(54) **Multi-layered thermal barrier coating**

(30) Priority: 30.04.2007 US 741831
(71) Applicant: United Technologies Corporation, Hartford, CT 06101 (US)
(72) Inventor: Tryon, Brian S., Glastonbury, CT 06033 (US); Maloney, Michael J., Marlborough, CT 06447 (US)
(74) Representative: Hall, Matthew Benjamin

(57) **Abstract**

A thermal barrier coating system (34) includes a substrate (32), a first transition metal layer (36) on the substrate (32), a bond coat (38) on the first transition metal layer (36), a second transition metal layer (40) on the bond coat (38), and an optional ceramic topcoat (42) on the second transition metal layer (40). In embodiments, the first transition metal layer (36) and the second transition metal layer (40) include platinum to resist reaction between the bond coat (38) and the substrate (32) and to slow oxidation of the bond coat (38).

## Description

This invention relates to thermal barrier coatings and, more particularly, to multi-layered thermal barrier coatings.

Components that are typically exposed to high temperatures, such as a turbine of a gas turbine engine, typically include a thermal barrier coating system to protect the component from oxidation and corrosion. For example, conventional thermal barrier coating systems include multiple layers that protect the component. Typically, the coating system includes a metallic bond coat on the component surface, and a ceramic topcoat on the metallic bond coat. The metallic bond coat reacts with oxygen that diffuses through the ceramic topcoat to preferably form an adherent aluminum oxide layer that protects the component from oxidation and corrosion.

Although effective, such thermal barrier coating systems often utilize expensive materials and are prone to forming reaction zones between the metallic bond coat and the component surface. Elemental constituents from the metallic bond coat and refractory metal constituents from the component may diffuse during fabrication and subsequent service to form reaction zones and react to form precipitant phases. The formation of the reaction zones results in local changes in chemical composition at the component surface, which may compromise the mechanical integrity of the component.

Accordingly, there is a need for an inexpensive thermal barrier coating system having an arrangement of layers that reduces or eliminates reaction zones. This invention addresses those needs while avoiding the shortcomings and drawbacks of the prior art.

A thermal barrier coating system according to a first aspect of the invention includes a substrate, a first transition metal layer on the substrate, a bond coat on the first transition metal layer, a second transition metal layer on the bond coat. Preferably, the thermal barrier coating system further comprises a ceramic topcoat on the second transition metal layer. In one preferred embodiment, the first transition metal layer and the second transition metal layer include platinum, which controls oxidation of the bond coat and resists reaction between the substrate and the bond coat.

A method of manufacturing the thermal barrier coating system according to a second aspect of the invention includes the steps of forming the first transition metal layer on the substrate, forming the bond coat on the first transition metal layer, forming a second transition metal layer on the bond coat, and optionally forming the ceramic topcoat on the second transition metal layer. In preferred embodiments, the formation of the bond coat may include vaporizing raw materials such as nickel, cobalt, chromium, aluminum, and/or yttrium, and electrically biasing the substrate to preferentially condense the vaporized raw materials onto the substrate or first transition metal layer.

In another aspect of the invention, a thermal barrier coating system includes a nickel alloy substrate having refractory metal constituents therein. A diffusion barrier layer is disposed on the substrate, a bond coat is disposed on the diffusion barrier layer, and an optional ceramic topcoat is disposed on the bond coat. In preferred embodiments, there may be another diffusion barrier layer disposed between the bond coat and the ceramic topcoat. In preferred, embodiments, the bond coat may comprise a MCrAlY material, wherein the M comprises at least one of nickel, cobalt, iron, or a combination thereof. The diffusion barrier layer may comprise of a transition metal that resists diffusion of the refractory metal from the substrate into the bond coat.

The various features and advantages of this invention will become apparent to those skilled in the art from the following detailed description of the currently preferred embodiment which is given by way of example only. The drawings that accompany the detailed description can be briefly described as follows.
Figure 1 is a schematic view of an example gas turbine engine.
Figure 2 is a schematic cross-sectional view of an example thermal barrier coating system.
Figure 3 is a schematic view of a cathodic arc-deposition process for depositing a bond coat on a component.

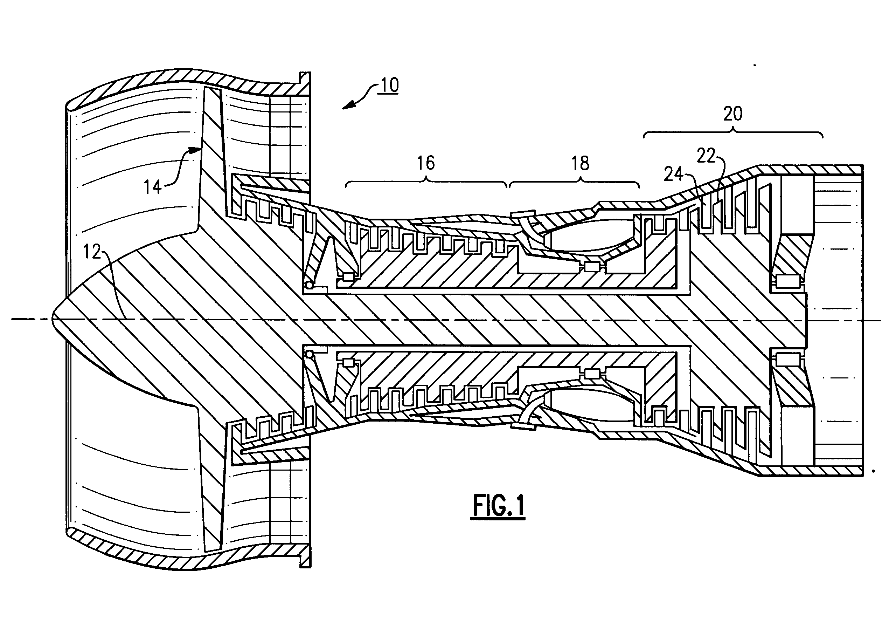

Figure 1 illustrates selected portions of an example gas turbine engine 10, such as a gas turbine engine 10 used for propulsion. In this example, the gas turbine engine 10 is circumferentially disposed about an engine centerline 12. The engine 10 includes a fan 14, a compressor section 16, a combustion section 18 and a turbine section 20 that includes turbine blades 22 and turbine vanes 24. As is known, air compressed in the compressor section 16 is mixed with fuel that is burned in the combustion section 18 to produce hot gases that are expanded in the turbine section 20. Figure 1 is a somewhat schematic presentation for illustrative purposes only and is not a limitation on the disclosed examples. Additionally, there are various types of gas turbine engines, many of which could benefit from the examples disclosed herein, which are not limited to the design shown.

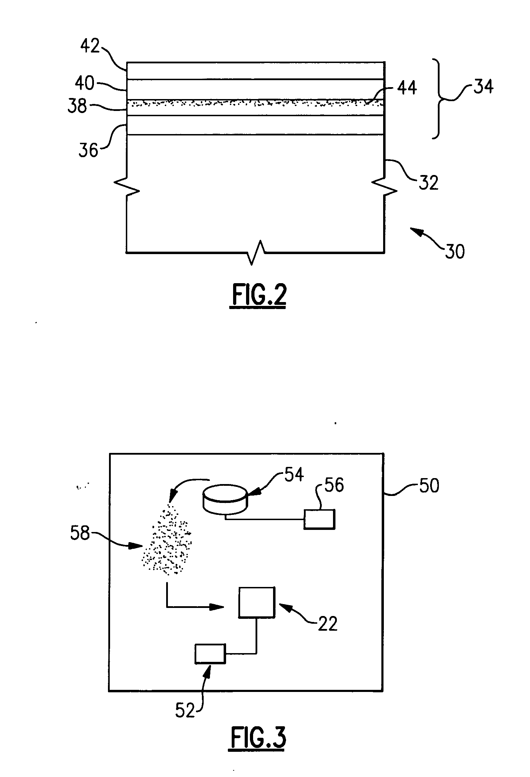

Figure 2 illustrates a selected portion 30 of one of the turbine blades 22 shown in Figure 1. Although this example is described with reference to the turbine blade 22, it is to be understood that the example could also apply to the turbine vanes 24, or other components within the gas turbine engine 10.

The portion 30 of the turbine blade 22 includes an underlying substrate 32 fabricated from a nickel-based superalloy. The nickel-based superalloy includes a refractory metal, such as ruthenium or rhenium. The presence of refractory metal elements within the nickel-based superalloy provides the benefit of creep-resistance within the turbine blade 22.

A thermal barrier coating system 34 is located on the substrate 32 to protect the substrate 32 from oxidation and corrosion. In this example, the thermal barrier coating system 34 includes a stacked layer arrangement having a first transition metal layer 36, a bond coat 38, a second transition metal layer 40, and an optional ceramic topcoat 42. That is, the first transition metal layer 36, the bond coat 38, and the second transition metal layer 40 may be used as a "stand-alone" system or in combination with the ceramic topcoat 42. In the disclosed example, the first transition metal layer 36 and the second transition metal layer 40 comprise a transition metal. The bond coat 38 comprises a MCrA1Y material, wherein the M comprises at least one of nickel, cobalt, iron, or a combination thereof, Cr is chromium, Al is aluminum, and Y is yttrium, and the ceramic topcoat 42 includes a ceramic material, such as yttrium stabilized zirconium, gadolinium stabilized zirconium, or other ceramic material. Given this description, one of ordinary skill in the art will recognize that the composition of the bond coat 38 may be varied, depending upon the needs of a particular application.

The first transition metal layer 36 resists formation of reaction zones between the bond coat 38 and the substrate 32 by limiting or eliminating diffusion of refractory metal constituents from the substrate 32. The first transition metal layer 36 includes a transition metal that is suitable for resisting diffusion of the refractory metal constituents from the substrate 32. For example, the first transition metal layer 36 may include platinum, which forms a diffusion barrier between the bond coat 38 and the substrate 32.

The first transition metal layer 36 also provides the benefit of chemically influencing the bond coat 38 to thereby reduce a chemical activity of at least one elemental constituent within the bond coat 38. For example, the first transition metal layer 36 may include platinum, which influences the chemical activity of aluminum within the bond coat 38 such that the aluminum is less active and thereby less likely to contribute to the formation of a reaction zone.

The second transition metal layer 40 resists the diffusion of oxygen from the ceramic topcoat 42 inwards toward the bond coat 38. For example, the second transition metal layer 40 forms a protective scale between aluminum that diffuses from the bond coat 38 and oxygen that diffuses through the ceramic topcoat 42. The protective scale slows further diffusion of oxygen and aluminum to thereby further protect the substrate 32 from oxidation and corrosion and reduce the likelihood of forming reactions zones. In other examples, depending upon a desire or need to control oxidation of the bond coat 38, the thermal barrier coating system 34 may or may not include the second transition metal layer 40.

One example of manufacturing the thermal barrier coating system 34 includes depositing the first transition metal layer 36 onto the substrate 32 using a known deposition process, such as vapor deposition or plating. The bond coat 38 is then deposited onto the first transition metal layer 36 using a cathodic arc-deposition process. The second transition metal layer 40 is then deposited onto the bond coat 38 using a known deposition process, such as vapor deposition or plating. And finally, the ceramic topcoat 42 is deposited onto the second transition metal layer 40 using a known deposition process such as physical vapor deposition (PVD), plasma spray, slurry, or other deposition process.

Optionally, the first transition metal layer 36 is treated before deposition of the bond coat 38 to enhance bonding between the first transition metal layer 36 and the bond coat 38. For example, the first transition metal layer 36 may be treated in an ion bombardment glow discharge process to remove surface contaminants and coarsen a surface of the first transition metal layer 36 to thereby promote mechanical and chemical adhesion of the first transition metal layer 36 and the bond coat 38.

Additionally, the manufacturing may include a diffusion step, such as a heat treatment, to diffuse the transition metal of the second transition metal layer 40 into a solid solution 44 with the bond coat 38.

Figure 3 illustrates an example cathodic arc-deposition process for forming the bond coat 38 on the first transition metal layer 36. In this example, the turbine blade 22 is placed into a deposition chamber 50 and coupled with an electrical source 52. Raw materials 54 for forming the bond coat 38 are staged within the deposition chamber 50, and are coupled with another electrical source 56. For example, the raw materials 54 may be pre-formed into a disk or other shape having a predetermined composition. That is, in the above example, the raw materials 54 may include a composition of nickel, cobalt, iron, chromium, aluminum, and/or yttrium that yields a desired composition of the bond coat 38.

The electrical source 56 is activated to energize the raw materials 54 with enough energy to vaporize the elemental constituents in the raw material 56. Vaporized raw material 58 then condenses onto the turbine blade 22, which is electrically biased by the electric source 52, to form the bond coat 38.

Although effective for forming a uniformly thick and dense bond coat 38 on the turbine blade 22, the cathodic arc-deposition process typically condenses at least some of the raw materials 54 onto the walls of the deposition chamber 50. Those materials are not deposited onto the turbine blade 22 and are therefore lost or not easily reclaimed. For relatively inexpensive raw materials, the loss is insignificant. However, certain materials, such as platinum and other transition metals, are more expensive, and the loss may be more significant. Depositing the transition metals of the transition metal layers 36 and 40 as separate layers using vapor deposition or plating, instead of including the transition metal in the bond coat 38, provides the ability to control consumption and loss of the transition metal to thereby reduce the expense of the thermal barrier coating system 34.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A thermal barrier coating system (34) comprising:
a substrate (32);
a first transition metal layer (36) disposed on the substrate (32);
a bond coat (38) disposed on the first transition metal layer (36); and
a second transition metal layer (40) disposed on the bond coat (38).

2. A thermal barrier coating system (34) as claimed in claim 1, wherein the first transition metal layer (36) and the second transition metal layer (40) comprise the same transition metal.

3. A thermal barrier coating system (34) as claimed in claim 2, wherein the first transition metal layer (36) and the second transition metal layer (40) comprise platinum.

4. A thermal barrier coating system (34) as claimed in claim 1, 2 or 3, wherein the second transition metal layer (40) is at least partially in solid solution with the bond coat (38).

5. A thermal barrier coating system (34) as claimed in any preceding claim, wherein the substrate (32) comprises a nickel superalloy comprising at least one of rhenium and ruthenium.

6. A thermal barrier coating system (34) as claimed in any preceding claim, wherein the bond coat (38) comprises a MCrAIY material, wherein the M comprises at least one of nickel, cobalt, iron, or a combination thereof, Cr is chromium, Al is aluminum and Y is yttrium.

7. A thermal barrier coating system (34) as claimed in any preceding claim, further comprising a ceramic topcoat (42) disposed on the second transition metal layer (40).

8. A thermal barrier coating system (34) as claimed in claim 7, wherein the first transition metal layer (36) is in direct contact with the substrate (32) and the bond coat (38), the bond coat (38) is in direct contact with the second transition metal layer (40), and the second transition metal layer (40) is in direct contact with the ceramic topcoat (42).

9. A method of manufacturing a thermal barrier coating system (34), comprising the steps:
(a) forming a first transition metal layer (36) on a substrate (32);
(b) forming a bond coat (38) on the first transition metal layer (36);
(c) forming a second transition metal layer (40) on the bond coat (38); and
(d) forming a ceramic topcoat (42) on the second transition metal layer (40).

10. A method as claimed in claim 9, wherein said step (b) includes vaporizing bond coat constituents, and electrically biasing the substrate (32) and first transition metal layer (36) to preferentially condense vaporized bond coat constituents on the first transition metal layer (36) to form the bond coat (38).

11. A method as claimed in claim 9 or 10, wherein the bond coat (38) comprises a MCrAlY material, wherein the M comprises at least one of nickel, cobalt, iron, or a combination thereof.

12. A method as claimed in claim 9, 10 or 11, further comprising diffusing the second transition metal layer (40) into a solid solution with the bond coat (38).

13. A method as claimed in any of claims 9 to 12, wherein said step (a) and said step (c) include at least one of: vapor depositing the first or second transition metal layer (36 or 40) on the substrate, and plating the first or second transition metal layer on the substrate (32).

14. A method as claimed in any of claims 9 to 13, wherein said step (b) includes cathodic arc-depositing the bond coat (38) on the first transition metal layer (36).
